# EUROPEAN PATENT APPLICATION

(11) **EP 4 659 880 A1**
(43) Date of publication of application: **10.12.2025**
(21) Application number: 24180287.5
(22) Date of filing: 05.06.2024
(51) Int. Cl.: B22F 10/28, B22F 10/37, B22F 10/85, B22F 12/90, B33Y 10/00, B33Y 30/00, B33Y 50/02, G01N 21/88, G06T 7/00

(54) **METHOD AND A SYSTEM FOR REAL-TIME MONITORING OF ADDITIVE MANUFACTURING (AM) BUILDING PROCESS OF A THREE-DIMENSIONAL (3D) PRODUCT GENERATED BY A 3D BUILDING DEVICE**

(71) Applicant: Euler ehf, 220 Hafnarfjördur (IS)
(72) Inventor: Eiriksson, Eythor Runar, 220 Hafnarfjördur (IS); Eiriksson, Eirikur Ragnar, 220 Hafnarfjördur (IS); Einarsdottir, Hildur, 220 Hafnarfjördur (IS); Kjartansson, Valtyr Örn, 220 Hafnarfjördur (IS)
(74) Representative: HKW Intellectual Property PartG mbB

(57) **Abstract**

This invention relates to a method and a system for real-time monitoring of additive manufacturing (AM) building process of a three dimensional (3D) product generated by a 3D building device, where the building process comprises alternatively distributing a material on a substrate by a coating mechanism and subsequently building a layer by means of fusing a portion of the material by a fusing device according to a planned geometry of the 3D product, comprising:
▪ obtaining, from an imaging device, image data for each build layer while building the 3D product, where the image data comprise image data of the distributed material before building a layer and after building a layer,
▪ processing, by a processor, the image data of each of said build layer in real-time, where the processing includes:
∘ processing the image data together with reference data, where the reference data comprises reference image data of a distributed material before building the layer and reference image data after building a layer, where based on the processing
∘ determining a statistical matching likelihood score between the image data and the reference data,
∘ utilizing the determined statistical matching likelihood scores for the build layers in determining a failure metric for the building process,
∘ comparing the determined failure metric with a reference failure metric, where in case the determined failure metric exceeds the reference failure metric
∘ issuing a real-time alert signal indicating that subsequent build layers are under potential failure risk.

## Description

### FIELD OF THE INVENTION

The present invention relates to a method and a system for real-time monitoring of additive manufacturing building process of a three-dimensional (3D) product generated by a 3D building device, where the building process comprises alternatively distributing a material on a substrate by a coating mechanism and subsequently building a layer by means of fusing a portion of the material by a fusing device according to a planned geometry of the 3D product.

### BACKGROUND OF THE INVENTION

Additive manufacturing (AM) is the general term for those technologies that successively join material in an additive manner to create physical objects as specified by 3D model data. AM has paved its way during the last decades, offering significantly more design freedom compared to subtractive methods. These technologies are presently used for various applications in the engineering industry such as the aerospace, automotive industry as well as other areas of society, such as medicine, education, architecture, toys and entertainment.

Metal AM has disruptive potential within several industries. In particular the aviation industry, where multi component assemblies can be combined into a single part. Industrial companies have documented 20:1 component reduction which results in a manufacturing savings of up to $3M per airplane. In addition, they document a 25% fuel efficiency and 25% lightweighting of components enabled by the technology. This has therefore significant financial and environmental impact.

Despite these benefits, the lack of quality assurance solutions is hindering widespread adoption of the technology. As these are heavily regulated industries, the need for a process and quality monitoring solution is substantial. Traditional measurement methods simply do not exist due to the complex geometrical freedom offered.

There are seven types of additive manufacturing (AM) processes defined by the ISO/ASTM 52900:2021 standard, one of which is Powder Bed Fusion (PBF). Within this category, a common method is Laser Powder Bed Fusion (LPBF). A typical LPBF printer uses a high-power laser in a very small point, to melt powder which is spread out by a powder distribution/coating mechanism. The laser profile is drawn on the flat powder surface using a XY galvanometer scanning mirror system and necessary optics to focus the laser beam uniformly across the build plane. This process continues in a layer wise manner until the full component has been created. This process commonly takes several days up to weeks, depending on the volume of the physical object or the amount of material to be fused to print the physical object.

Existing solutions for monitoring of AM processes are mainly focused on acquiring images from a camera installed on the printer, with an unobstructed view of the build area. The images are then stored in a folder on a dedicated computer where an operator can review the images captured. Commonly, two images are captured for each layer that is produced. First an image of the powder spread is saved before the laser starts its melting procedure. After the layer has finished melting the layer then a second image is taken. These are stored in separate folders, labeled with the corresponding layer number.

Several types of defects may occur during the AM process, such as protruding metal defects, which occur when a lasered metal part warps due to thermal stresses and as a result protrudes above the surface of the powder bed. Such a defect can cause a collision between the coater (powder spreader) and the metal which can hinder successful redistribution of powder and damage the coater itself or the mechanical assembly. This can cause significant downtime for the printer and costs associated with servicing the printer.

Other types of defects include spattering defect, spreading defect, hole defect, porosity etc.. The origin of the defect can stem from various factors such as poor climate conditions (thermal, inert gas flow (Argon/Nitrogen) etc.), faulty hardware components and poor selection of process parameters. A considerable number of defects also stem from a poor geometry design of the part to be printed, such as lack of support structures. These defects can lead to non-conformance of the printed part.

Quality assurance and control in AM is challenging due to the process's inherent complexity, involving layer-by-layer construction that introduces variability. The unpredictability of material properties, coupled with high precision requirements, adds to the difficulty.

In-process monitoring is limited, as products are often inaccessible until completion, making real-time quality checks challenging. Post-processing steps can also introduce variability, and the lack of standardized procedures in this relatively new field further complicates consistent quality control. AM's sensitivity to machine-specific parameters, like temperature and printing speed, and the unpredictability of complex designs, pose additional hurdles. Moreover, analyzing the vast data generated during printing requires advanced software and expertise, while a skills gap in the evolving workforce can lead to production inconsistencies, underlining the need for enhanced training and technology development in AM. The post-process chain is long and can include several processes such as thermal annealing, CNC machining, EDM machining and polishing. This can take days and involve several experts per stage. Unfortunately, the defects are often not visible until the very end of the processing chain (i.e. after polishing). In many cases these defects could have been spotted in the LPBF stage and substantial time, resources and money saved.

More importantly, in severe cases the defects may even not be identified at all, which may cause risk of more fragile objects than expected, which obviously may cause high risk when the object is critical and is e.g. used in the aviation industry.

### SUMMARY OF THE INVENTION

It is an object of the invention to overcome the above-mentioned problem by use of real-time monitoring for enabling early stopping of a failed or build that is likely to fail, which saves a significant amount of down time. This is of a particular relevance when printing multiple parts in the same build because a single misprinted/defective component can affect the others around it and compromise the entire build. Early detection of this occurring thus saves the rest of the entire build if e.g. a user is alerted. The user could as an example then manually delete the defective part from the building instructions, or the defective part could be automatically deleted, thus saving the rest of the build.

In general, the invention preferably seeks to mitigate, alleviate or eliminate one or more of the above-mentioned disadvantages of the prior art singly or in any combination. In particular, it may be seen as an object of embodiments of the present invention to provide a method and a system that solves the above-mentioned problems, or other problems.

To better address one or more of these concerns, in a first aspect of the invention a method is provided for real-time monitoring of additive manufacturing (AM) building process of a three dimensional (3D) product generated by a 3D building device, where the building process comprises alternatively distributing a material on a substrate by a coating mechanism and subsequently building a layer by means of fusing a portion of the material by a fusing device according to a planned geometry of the 3D product, comprising:
▪ obtaining, from an imaging device, image data for each build layer while building the 3D product, where the image data comprise image data of the distributed material before building a layer and image data after building a layer,
▪ processing, by a processor, the image data of each of said build layer, where the processing for each build layer comprises:
   ∘ processing the image data together with reference data, where the reference data comprises reference image data of a distributed material before building the layer and reference image data after building a layer, where based on the processing
   ∘ determining a statistical matching likelihood score between the image data and the reference data,
wherein the method further comprises:
- utilizing the determined statistical matching likelihood scores for the build layers in determining a failure metric for the building process,
- comparing the determined failure metric with a reference failure metric, where in case the determined failure metric exceeds the reference failure metric
- issuing an alert signal indicating that subsequent build layers are under potential failure risk.

The step of determining the failure metric for the building process is in an embodiment continuously repeated during the building process.

Accordingly, a reliable solution is provided that enables early stopping of a potentially failed build, which saves a significant amount of down time. The step of issuing the alert signal may as an example be done in real-time, e.g. via text message, email, automatic phone call etc..

Moreover, it is now possible to identify defects during the build that might otherwise not be identified at all, which in turn could therefore resulting in a defected 3D product which may have severe consequences when such a 3D build is utilized in various applications.

Also, in case of a successful build, the present invention enables issuing data showing that the build was successful.

The reference data may as an example include original raw reference data from previous image data and/or data derived therefrom. The reference data may continuously be extended/updated/improved while the building process takes place.

The statistical matching likelihood score may be understood as, but not limited to, as a classification of the status of the current build layer, for example but not limited to, "support structure", "ok", "potential issue", "minor issue", "critical issue". A classification model can as an example determine the confidence score from e.g. 0 to 1 for each layer status type and the overall status assigned to the current layer being the one with the highest confidence score.

Said step of calculating the potential failure metric can be obtained with sequential data models such as, but not limited to, recurrent neural networks (RNN). RNN is a deep learning model capable of evaluating time-series data, in this case the failure likelihood score based on the identified potential defects and layer status analyzed from the image data for each build layer. A RNN model takes sequential data such as time-series data as input and can output a specific data output. The model can be trained to output a failure likelihood score for a future build layer (for a certain number of layers after the current layer) based on the failure likelihood of a certain number of previous layers. Other layer results can also be used as input for the sequential model, such as, but not limited to, raw or processed image data, defect type and number, size and position of each defect type detected per layer.

The term build or building process may, according to the present invention, also be understood as print or printing process. Also, the distributed material on the substrate may in one embodiment comprise a metal powder and the fusing device may comprise a laser, and where the 3D product is a metal product. The distributed material may also be of any other type, e.g. plastic material where the 3D product is a plastic product.

In an embodiment, the processing further comprises:
- identifying potential defects for each build layer, where the potential defect have one or more different characteristic property,
wherein the step of determining the failure metric for the building process is further based on using the identified potential defects. The step of using the identified potential defects and the statistical matching likelihood scores in calculating the potential failure metric may in an embodiment comprise calculating a statistical likelihood of a critical failure for the forthcoming build layers.

Said step of identifying potential defects may in one embodiment comprise comparing the characteristic properties of the identified potential defects with characteristic properties of previously detected defects obtained from previously built layers of said 3D product and/or from previous 3D products.

The identified potential defects may in an embodiment further comprise grouping the identified potential defects into different characteristic property groups, each group containing potential defects of similar or identical nature.

In an embodiment, the method further comprises calculating the number of potential defects within each group, wherein the calculated number is configured to be used in presenting in real time a frequency plot for different types of potential defects in real-time. The step of calculating may in an embodiment comprise determining a number of potential defect matches and/or calculating areal of the potential defects and utilize the areal in converting it into representation of the number of potential defects.

In addition to the frequency plot of the build layers, the images for each build layer within the frequency plot may additionally be shown where the potential defects are highlighted via colored markups, e.g. colored box or circle, to visually point to where the potential defect is located for each build layer. As an example, the user may scroll within the frequency plot and by doing so, the build layer where the user is scrolling through is shown by showing the image data pair for the build layer together with said colored markups. If the user selects a given colored markup this colored markup is hidden in the displayed image pair. The user can later select the colored markup again if a further evaluation of the potential defect is required.

Accordingly, by identifying the potential defects the reliability of enabling early stopping of a potentially failed build may be further improved.

The potential defects are selected from, but is not limited to:
- a protruding fused material defect occurring due to warpage of the fused material,
- a spatter defect occurring when laser melt pool conditions are poor causing unwanted particles to be formed such as due to oxidized powder or melt pool ejections,
- a streaking defect occurring when the coating mechanism is defective causing insufficient powder distribution during coating or due to lose solidified particles being dragged along with the coating mechanism,
- a powder hole or cavity caused due to insufficient distribution of powder,
- a hopping or ringing defect occurring during metal powder distribution process where the coating mechanism may collide with a protruding metal causing e.g. a mechanical ringing or vibration resulting from collision,
- a smoke defect caused by suboptimal build chamber environment parameters, e.g. gas composition or gas flow,
- a burn defect caused when the fusing device, subsequent to distribution of the material, strikes already fused material,
- a porosity defect caused by voids or holes inside fused portion or layer.

The porosity in AM, often referred to as 3D printing, relates to the presence of small voids or holes within the manufactured 3D product which may be a metal part. The voids in the porosity defect may be detrimental to the structural integrity and mechanical properties of the component, affecting its density, strength, ductility, and fatigue life.

Accordingly, identifying said defects such as the porosity, preferably in real time, is important for applications where the mechanical properties and reliability of the metal parts are critical, such as in aerospace, automotive, and medical devices.

In an embodiment, the method further comprises receiving an input command from a user via a user interface, and displaying, in response to the input command, one or more of the different types of potential defects or regions of interest. The received input command may be done via touch button command from the user, or via mouse click command, or via speech command, just to mention a few examples. The user may as an example select one potential defect at a time that may e.g. be displayed on a computer screen, or two or more potential defects, or all, the potential defects simultaneously, where the user may visually see the development of the potential defects as a function of time or as a function of the built layers, starting from the first built layer. This may be presented in various formats, such as, but not limited to, as a line where each point on the line illustrates potential defects for each built layer. Accordingly, a very user-friendly way is provided for visually identifying how the building process is developing from the first built layer until the present built layer.

In a second aspect of the invention, a system is provided for real-time monitoring of additive manufacturing (AM) building process of a three-dimensional (3D) product, comprising:
- a 3D building device configured to alternatively distributing a material on a substrate by a coating mechanism and subsequently building a layer by means of fusing a portion of the material by a fusing device according to a planned geometry of the 3D product,
- an imaging device for providing image data for each build layer while building the 3D product, where the image data comprise image data of the distributed material before building a layer and image data after building a layer,
- a processor for processing the image data of each of said build layer, where the processing comprises:
   ∘ processing the image data together with reference data, where the reference data comprises reference image data of a distributed material before building the layer and reference image data after building a layer, where based on the processing
   ∘ determining a statistical matching likelihood score between the image data and the reference data,
   ∘ utilizing the determined statistical matching likelihood scores for the build layers in determining a failure metric for the building process,
   ∘ comparing the determined failure metric with a reference failure metric, where in case the determined failure metric exceeds the reference failure metric
   ∘ issuing a real-time alert signal indicating that subsequent build layers are under potential failure risk.

In an embodiment, the system further comprises an alert unit operable connected to the processor for triggering an alert command in response to said real-time alert signal, which may as an example be an automatic email, text message and any type of alert signals well known to a person skilled in the art. This alert signal may also be utilized to trigger the 3D building device to automatically stop the building process.

In an embodiment, the processor is further configured to utilize the determined failure metric by issuing a rating score for the 3D building device indicating the reliability of the 3D building device. In that way, it is possible to monitor when the 3D building device needs maintenance as an example.

The 3D building device may in an embodiment comprise Laser Powder Bed Fusion (LPBF) printer and where the fusing device comprises a laser.

The distributed material may as an example be, but is not limited to, a metal powder, and the fusing device may comprise a laser device, and where the 3D product is a metal product.

The 3D building device may in one alternative embodiment be understood as a 3D printing device, which in an embodiment comprises a Laser Powder Bed Fusion (LPBF) printer and where the fusing device comprises a laser.

The imaging device may include any type of a digital camera such as, but not limited to, a color camera, monochrome camera, thermal camera, multispectral camera, that is preferably placed within or on the 3D printing device, where the camera is connected, either wirelessly or in a wired manner, to a computer device comprising the processor. The computer device may also be a part of a cloud platform system.

Accordingly, a warning system is provided that alerts the user of a potential upcoming critical failure, that is before it takes place. The warning may be determined based on the status of the current build layer, e.g. via deep learning model, that calculates the likelihood of critical failure for each layer. The warning metric may in an embodiment be determined by calculating a statistical likelihood of critical failure for the current layer and n number of previous layers. If the likelihood exceeds a predetermined threshold, which may be user controllable, an alert signal may be sent to prompt a potential issue, thus preventing catastrophic events during the build process. The alert signal may also act as an automatic signal that is directly coupled to the 3D building device that automatically stops the building process.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figure 1 depicts a flowchart of a method according to the present invention for real-time monitoring of additive manufacturing (AM) building process of a three-dimensional (3D) product generated by a 3D building device,
Figure 2 depicts an alternative embodiment of a flowchart illustrating an embodiment of a method according to the present invention,
Figures 3 and 4 illustrate graphically a frequency plot of number of defects per layer, where different types of potential defects or regions of interest is displayed to a user in real-time, and
Figure 5 depicts a block diagram of a system according to the present invention.

### DESCRIPTION OF EMBODIMENTS

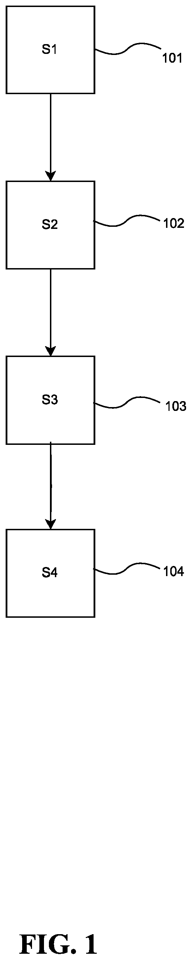

Figure 1 shows a flowchart of a method according to the present invention for real-time monitoring of additive manufacturing (AM) building process of a three-dimensional (3D) product generated by a 3D building device. The building process comprises alternatively distributing a material on a substrate by a coating mechanism and subsequently building a layer by means of fusing a portion of the material by a fusing device according to a planned geometry of the 3D product. The distributed material may be a material including plastic or any plastic type material and where the 3D product is made of plastic or any plastic type material. In another alternative embodiment, the distributed material is a metal powder and where the fused portion is a metal portion and where the 3D product is a metal product.

In a first step (S1) 101, image data obtained from an imaging device are received for each build layer while building the 3D product, where the image data comprise image data of the distributed material before building a layer and after building a layer. The imaging device may include any type of digital camera that may be placed within or outside the chamber where the building process takes place.

In a second step (S2) 102, the image data of each build layer is processed, by a processor, preferably in real time. The processing for each build layer comprises processing the image data together with reference data, where the reference data comprises reference image data of a distributed material before building the layer and reference image data after building a layer.

In a third step (S3) 103, a statistical matching likelihood score between the image data and the reference data is determined.

In a fourth step (S4) 104, the statistical matching likelihood score is utilized in determining a failure metric for the building process, where the determined failure metric is compared with a reference failure metric, where in case the determined failure metric exceeds the reference failure metric, issuing a real-time alert signal indicating that subsequent build layers are under potential failure risk.

The step of processing the image data may in an embodiment further comprise identifying potential defects having one or more different characteristic properties and utilize the identified potential defects as additional input in determining the failure metric.

The potential defects include, but are not limited to, one or more of the following: a protruding fused material defect occurring due to warpage of the fused material, a spatter defect occurring when laser melt pool conditions are poor causing unwanted particles to be formed such as due to oxidized powder or melt pool ejections, a streaking defect occurring when the coating mechanism is defective causing insufficient powder distribution during coating or due to loose solidified particles being dragged along with the coating mechanism, a powder hole or cavity cause due to insufficient distribution of powder, a hopping or ringing defect occurring during metal powder distribution process where the coating mechanism may collide with a protruding metal causing e.g. a mechanical ringing or vibration resulting from collision, a smoke defect caused by suboptimal build chamber environment parameters, e.g. gas composition or gas flow, a burn defect caused when the laser, subsequent to distribution of metal powder, strikes already solidified metal, and porosity defect caused by voids or holes inside fused portion or layer.

The identified potential defects may in an alternative embodiment be used as an additional input in calculating, e.g. via deep learning or any type of machine learning or mathematical modeling, a statistical likelihood of a critical failure for a current or future build layer based on identified potential defects in previous build layers. This may in an alternative embodiment comprise identifying potential defects by comparing the characteristic properties of the identified potential defects with characteristic properties of previously detected defects obtained from previously built layers of said 3D product and/or from previous 3D products. Based on the comparison the identified potential defects may be grouped into different characteristic property groups where each group contains potential defects of similar or identical nature.

Moreover, the number of potential defects within each group may be calculated, where the calculated number is configured to be used in presenting in real time a frequency pattern for different types of potential defects in real-time. The step of calculating may include determining a number of potential defect matches and/or calculating area of the potential defects and utilize the area in converting it into representation of number of potential defects. An input command may in an embodiment be received from a user via a user interface, and in response to the received command one or more of the different types of potential defects or regions of interest are displayed.

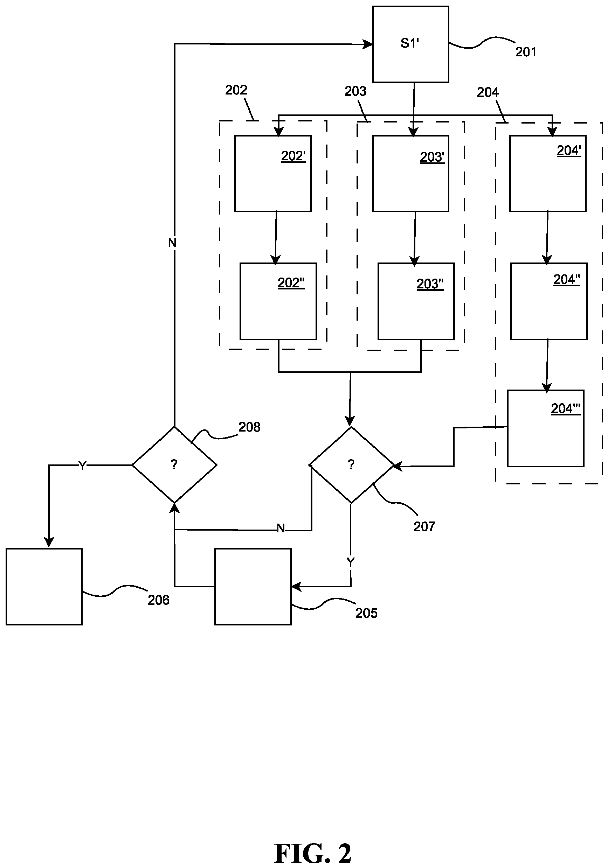

Figure 2 depicts an alternative embodiment of a flowchart illustrating an embodiment of a method according to the present invention. The steps discussed previously in relation to Figure 1 may be performed by a software, which may be considered as a prediction software.

In step (S1') 201, image data obtained from an imaging device are received for each build layer while building the 3D product, where the image data comprise image data of the distributed material before building a layer and after building a layer, as discussed previously.

In this embodiment, three parallel processing steps 202, 203, 204 are performed.

Step 202 includes two sub-steps, where in sub-steps 202' a prediction model analyzes the chance of future failure based on the status and defects of the last n layers, and sub-steps 202" displays a chance of failure in a gauge or by other means of display in build job overview.

Step 203 includes two sub-steps, where in sub-steps 203' a classification model analyzes the image pair for general status of build, and sub-steps 203" displays the status of the build job on a status bar.

Step 204 includes three sub-steps, where in sub-steps 204' a detection model analyzes the image pair for defect, sub-steps 204" displays the detected defects on the image pair to aid a user in evaluating the build job, and step 204‴ the number of defects per type is shown to the user in a analyzing tool.

If any of the above mentioned three parallel processing steps 202, 203, 204 result in that a real-time alert signal is triggered 207 an alert is sent to the user 205, and the build job may automatically or via the user be stopped. If not, it is checked if the build is completed 208, and if yes, a quality report is generated for the build 206.

If the build is not completed, the above-mentioned steps are repeated starting from step S 1' 201.

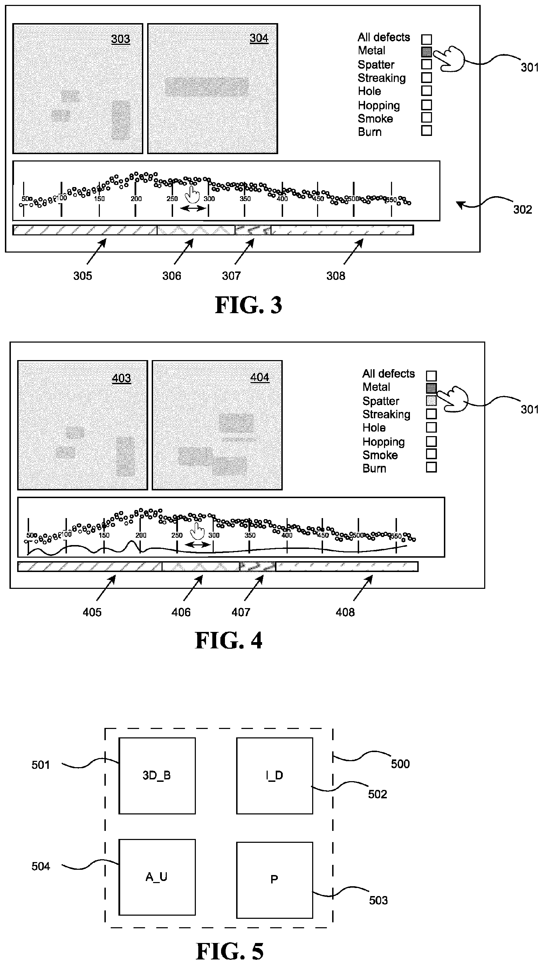

Figures 3 and 4 illustrate graphically a frequency plot of number of defects per layer, where different types of potential defects or regions of interest are displayed to a user in real-time.

As shown here, over 550 layers have been built, but the number of defects for each build layer is displayed in real time, starting with the first build layer on the far-left side. Such a building process can take hours, days or even weeks, depending on the volume and complexity of the 3D product being built.

In Figure 3, the user 301 selects a single defect type ("Metal"), which triggers displaying a frequency plot of the selected defect 302, whereas in Figure 4 two defects are selected, "Metal" and "Spatter" area selected.

The vertical axis represents the number for potential defects selected and the horizontal axis represents the layer number.

In Figure 3, each circle in the plot presents the number of "Metal" defects for a single build layer before building the layer and after building the layer, where as already mentioned, the image pairs for each layer are analyzed, e.g. using deep learning algorithms, to determine defective areas in the images. This may be done by a separate deep learning model that is trained for the coating layer images and the solidified layer images.

In Figure 4 the solid line additionally represents the "Spatter" defect that is displayed together with the "Metal" defects.

A slider module enables the user to slide the image from layer to layer as depicted by the arrow, where upon sliding as depicted here the image pairs for each layer 303, 304 are displayed on the display screen, where e.g. the left images 303, 403 represent coat image and the right images 304, 404 represents solidification image, for the same layer.

Below the horizontal axis is a visual real-time status of the build process 305, 306, 307, 308 and 405, 406, 407, 408, which may be visually shown via different coloring where e.g. green color indicates that the build process is accordion to plan, a yellow color indicates possible future failure, and a red color indicates a critical potential failure.

Figures 3 and 4 illustrate a build job for a single machine, where after completing the build job the machine may be rated with a kind of a quality indicator or machine health statistic.

The method steps discussed in relation to Figure 2 preferably apply here, where at any instant of time, the build job may be terminated, either by the user or be automatically terminated.

Figure 5 depicts a block diagram of a system 500 according to the present invention, comprising a 3D building device (3D_B) 501, an imaging device (I_D) 502, a processor (P) 503 and an alert unit (A_U) 504 .

The 3D building device is configured to alternatively distribute a material on a substrate by a coating mechanism and subsequently building a layer by means of fusing a portion of the material by a fusing device according to a planned geometry of the 3D product.

The imaging device provides image data for each build layer while building the 3D product, where the image data comprise image data of the distributed material before building a layer by fusing a portion of the material and image data of the built layer.

The processor is configured for processing the image data of each of said build layer the first layer in real-time, where the processing includes: processing the image data together with reference data, where the reference data comprises reference image data of a distributed material before building the layer and reference image data after building a layer, where based on the processing a statistical matching likelihood score is determined between the image data and the reference data. This score is utilized in determining a failure metric for the building process, which is compared with a reference failure metric, where in case the determined failure metric exceeds the reference failure metric, a real-time alert signal is issued indicating that subsequent build layers are under potential failure risk.

Moreover, as depicted in Figures 4 and 5, the system further comprises an user interface comprising an input unit or a slider configured to receive an input command from a user, and a display for displaying, in response to the input command, one or more of the different types of potential defects discussed in relation to the flowchart in Figure 1.

The system further comprises an alert unit 504 that is operable connected to the processor for triggering an alert command in response to said real-time alert signal.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for real-time monitoring of additive manufacturing (AM) building process of a three-dimensional (3D) product generated by a 3D building device, where the building process comprises alternatively distributing a material on a substrate by a coating mechanism and subsequently building a layer by means of fusing a portion of the material by a fusing device according to a planned geometry of the 3D product, comprising:
▪ obtaining, from an imaging device, image data for each build layer while building the 3D product, where the image data comprise image data of the distributed material before building a layer and image data after building a layer,
▪ processing, by a processor, the image data of each of said build layer, where the processing for each build layer comprises:
∘ processing the image data together with reference data, where the reference data comprises reference image data of a distributed material before building the layer and reference image data after building a layer, where based on the processing
∘ determining a statistical matching likelihood score between the image data and the reference data,
wherein the method further comprises:
• utilizing the determined statistical matching likelihood scores for the build layers in determining a failure metric for the building process,
• comparing the determined failure metric with a reference failure metric, where in case the determined failure metric exceeds the reference failure metric
• issuing a real-time alert signal indicating that subsequent build layers are under potential failure risk.

2. The method according to claim 1, wherein the step of determining the failure metric for the building process is continuously repeated (in real-time) during the building process.

3. The method according to claim 1 or 2, wherein the processing further comprises:
• identifying potential defects for each build layer, where the potential defect have one or more different characteristic property,
wherein the step of determining the failure metric for the building process is further based on using the identified potential defects.

4. The method according to claim 3, wherein the step of using the identified potential defects and the statistical matching likelihood scores in calculating the potential failure metric comprises calculating a statistical likelihood of a critical failure for the forthcoming build layers.

5. The method according to claim 3 or 4, wherein the step of identifying potential defects comprises comparing the characteristic properties of the identified potential defects with characteristic properties of previously detected defects obtained from previously built layers of said 3D product and/or from previous 3D products.

6. The method according to claim 5, further comprising grouping the identified potential defects into different characteristic property groups, each group containing potential defects of similar or identical nature.

7. The method according to claim 6, further comprises calculating the number of potential defects within each group, wherein the calculated number is configured to be used in presenting in real time a frequency plot for different types of potential defects in real-time.

8. The method according to claim 7, wherein the step of calculating comprises determining a number of potential defect matches and/or calculating areal of the potential defects and utilize the areal in converting it into representation of the number of potential defects.

9. The method according to any of the claims 3 to 8, wherein the potential defects are selected from:
• a protruding fused material defect occurring due to warpage of the fused material,
• a spatter defect occurring when laser melt pool conditions are poor causing unwanted particles to be formed such as due to oxidized powder or melt pool ejections,
• a streaking defect occurring when the coating mechanism is defective causing insufficient powder distribution during coating or due to lose solidified particles being dragged along with the coating mechanism,
• a powder hole or cavity cause due to insufficient distribution of powder,
• a hopping or ringing defect occurring during metal powder distribution process where the mechanism may collide with a protruding metal causing e.g. a mechanical ringing or vibration resulting from collision,
• a smoke defect caused by suboptimal build chamber environment parameters, e.g. gas composition or gas flow,
• a burn defect caused when the laser, subsequent to distribution of metal powder, strikes already solidified metal,
• porosity defect caused by voids or holes inside fused portions or layers.

10. The method according to any of the claims 3 to 9, further comprising:
• receiving an input command from a user via a user interface,
• displaying, in response to the input command, one or more of the different types of potential defects or regions of interest.

11. A system for real-time monitoring of additive manufacturing (AM) building process of a three-dimensional (3D) product, comprising:
• a 3D building device configured to alternatively distributing a material on a substrate by a coating mechanism and subsequently building a layer by means of fusing a portion of the material by a fusing device according to a planned geometry of the 3D product,
• an imaging device for providing image data for each build layer while building the 3D product, where the image data comprise image data of the distributed material before building a layer and image data after building a layer,
• a processor for processing the image data of each of said build layer, where the processing comprises:
∘ processing the image data together with reference data, where the reference data comprises reference image data of a distributed material before building the layer and reference image data after building a layer, where based on the processing
∘ determining a statistical matching likelihood score between the image data and the reference data,
∘ utilizing the determined statistical matching likelihood scores for the build layers in determining a failure metric for the building process,
∘ comparing the determined failure metric with a reference failure metric, where in case the determined failure metric exceeds the reference failure metric
∘ issuing a real-time alert signal indicating that subsequent build layers are under potential failure risk.

12. The system according to claim 11, further comprising an alert unit operable connected to the processor for triggering an alert command in response to said real-time alert signal.

13. The system according to claim 11 or 12, further the processor is further configured to utilize the determined failure matric is issuing a rating score for the 3D building device indicating the reliability of the 3D building device.

14. The system according to any of the claims 11 to 13, wherein the 3D building device comprises Laser Powder Bed Fusion (LPBF) printer and where the fusing device comprises a laser.
